# EUROPEAN PATENT APPLICATION

(11) **EP 2 732 934 A2**
(43) Date of publication of application: **21.05.2014**
(21) Application number: 13466026.5
(22) Date of filing: 06.11.2013
(51) Int. Cl.: B25J 9/16, B25J 19/02

(54) **A device for measuring a position of an end effector, especially of a manipulator or a machining tool**

(30) Priority: 16.11.2012 CZ 20120798
(71) Applicant: CVUT V Praze, Fakulta Strojní, 166 07 Praha 6 (CZ)
(72) Inventor: Valásek, Michael, 14300 Praha 4 (CZ)
(74) Representative: Novotny, Karel

(57) **Abstract**

The invention concerns a device for measuring a position of an end effector (2), especially of a manipulator or a machining tool, driven by a driving construction (1) with drives positioned between a frame (4) and the end effector (2) of the manipulator in order to control the manipulator, where, parallel to the driving construction (1) with the drives of the manipulator, there is an individual measuring construction (3) positioned between the frame (4) and the end effector (2), with no drives, equipped with movement sensors in a number equal or higher than the number of degrees of freedom of the end effector (2) of the manipulator.

The measuring construction (3) is created by one string with serial positioned arms (5) or with at least two strings with arms (5) positioned in parallel.

Alternatively, the measuring construction (3) consists of at least two optical sensors (11) positioned on the frame (4) or on the end effector (2) and of at least two reflectors (13) of the laser beam positioned on the end effector (2) or on the frame (4) or it consists of at least two cameras (14) positioned on the frame (4) or on the end effector (2) and the reflector (13) of laser beams positioned on the end effector (2) or on the frame (4) or of the source (16) of the laser beam (17) positioned on the end effector (2) or on the frame (4) and of a photosensitive element (18) positioned on the frame (4) or on the end effector (2).

## Description

### Technical Field

The invention concerns a device for measuring a position of an end effector, especially of a manipulator or a machining tool, driven by a driving construction with drives positioned between a frame and an end effector of a manipulator in order to control the manipulator.

### State-of-the-art

To control the movement of manipulators or industrial robots or machining tools or measuring devices it is necessary to measure accurately the achieved position of their end effectors, from which the exact deviation of the required position is derived and on its basis an effective control of the drives of the manipulator is performed to achieve the required position. This is often disabled due to a deformation of the construction on which the measurements are carried out, since the drives of the manipulator are positioned on the construction. The construction is deformed by the action of forces of the drives and therefore they cause measurement of an unknown value on the deformed construction.
The solution according to the invention WO 99/67066 is trying to prevent the above mentioned by using the measurement on a rigid arm in the center of the Tricept mechanism on which are no drives. A limitation is that this only provides a solution for the Tricept mechanism and measures only a part of the movement of the end effector, since it measures 3 degrees of freedom of a position of the positioning head and does not measure the other degrees of freedom of a position of the tool head, which has 4 to 5, or even more, degrees of freedom. Another great limitation of the invention is that it is not possible to use the redundant measurement, since only one arm is used for the measurement. A disadvantage of the invention is also that the rigid arm, on which the measurement is carried out, is positioned in the area in the center of the Tricept mechanism. Such a free area need not to be available for other manipulators.

The aim of this invention is to improve the control of movements of manipulators or industrial robots or machining tools or measuring devices by improving accuracy of the measurement of the position of the end effector for various constructional arrangements and with a possibility to use the redundant measurement advantages.

### Subject Matter of the Invention

The subject matter of the invention for measuring a position of an end effector, especially a manipulator or a machining tool, driven by a driving construction with drives positioned between a frame and the end effector of the manipulator in order to control the manipulator is in the fact that collateral to the driving construction with the drives of the manipulator there is an individual measuring construction positioned between the frame and the end effector, which has no drives but is equipped with sensors of a movement in a number equal or larger than the number of degrees of freedom of the end effector of the manipulator.
The measuring construction is created by one string with serial positioned arms or at least two strings with arms positioned in parallel.
Alternatively, the measuring construction consists of at least two optical sensors positioned on the frame or on the end effector and at least two reflectors of a laser beam positioned on the end effector or on the frame, or of two cameras positioned on the frame or on the end effector and a reflector of laser beams positioned on the end effector or on the frame, or of a source of a laser beam positioned on the end effector or on the frame and a photosensitive element positioned on the frame or on the end effector.

Advantageously, the measuring construction is connected to the driving construction next to the end effector using at least another one connecting element.
Between the driving construction and the end effector there can be possibly positioned a platform to which the measuring construction is connected; the measuring construction is connected to the end effector using an additional measuring construction. Advantageously, the measuring construction is equipped with sensors of a movement in a number of at least two higher than the number of degrees of freedom of the end effector of the manipulator.
The measuring construction can possibly be positioned under the covering carried by the end effector.

The advantage of the device for measuring a position of the end effector of the manipulator for the purpose of its control is the more accurate measurement of the end effector and therefore improvement of its control and achievement of the required final position of the manipulator. Another advantage is that the redundant measurement method can be used, which, aside from the increase of the measurement accuracy, enables to measure and to compensate by the control the temperature deformation of the whole manipulator including the driving and measuring construction. An advantage is also that the measuring construction of the device according to the invention can be of similar arrangement as the driving construction and therefore a danger of collisions between both the constructions is limited, or the area in which the measuring construction must be positioned is limited.

### Review of the Figures in the Drawings

In the enclosed Figures there are schematic depictions of the device for measuring a position of the end effector of the manipulator in order to control the manipulator according to the invention, where
- Fig. 1: - a serial kinematic structure device with one collateral measuring construction,
- Fig. 2: - a serial kinematic structure device with two collateral measuring constructions,
- Fig. 3: - a parallel kinematic structure device with one collateral measuring construction,
- Fig. 4: - a parallel kinematic structure device with two collateral parallel measuring constructions,
- Fig. 5: - a parallel kinematic structure device with an optical measuring construction,
- Fig. 6: - a parallel kinematic structure device with a camera measuring construction,
- Fig. 7: - a parallel kinematic structure device with a laser measuring construction,
- Fig. 8: - a device of a redundantly driven Delta robot with one collateral measuring construction,
- Fig. 9: - a device for measuring a position of an end effector of a machining tool,
- Fig. 10: - an alternative embodiment of the device in Fig. 1 and
- Fig. 11: - an alternative embodiment of the device in Fig. 5 and Fig. 3

### Examples of the Embodiments of the Invention

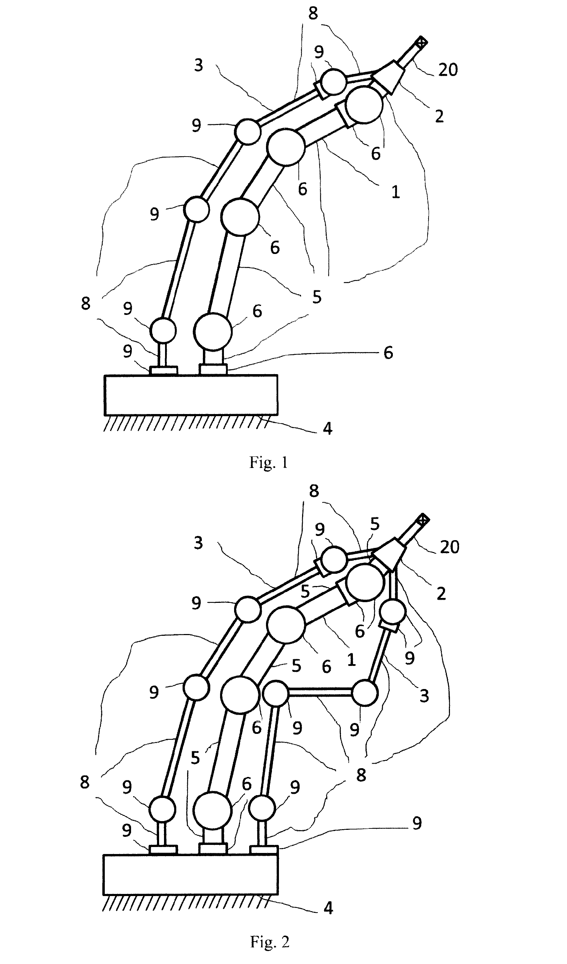

In Fig. 1 there is a depiction of a basic embodiment of the device for measuring a position of the end effector 2 of the manipulator in order to control the manipulator. It concerns a planar projection of a spatial manipulator with a serial kinematic structure with 6 degrees of freedom and 6 drives. The end effector 2 with the tool 20 is carried by the driving construction 1 positioned between the frame 4 and the end effector 2 and created by five arms 5 connected using six rotational joints 6 to the drives. Collateral to the driving construction 1, between the frame 4 and end effector 2 there is the measuring construction 3 positioned, separated from the driving construction 1. The individual measuring construction 3 has a serial kinematic structure created by five arms 8 connected using six rotational joints 9 equipped with rotational movement sensors. The individual measuring construction 3 contains no drives inside to drive the end effector 2 and contains only sensors of a relative movement in the rotational joints 9. The number of the relative movement sensors in the rotational joints 9 is six and this is equal to the number of degrees of freedom of a spatial manipulator, which are six.

The procedure of the possible control of the manipulator with a driving construction 1 and the measuring construction 3 is as follows. The drives in the driving construction are equipped with the relative movement sensors and these sensors are used for stabilization of the drives by means of a velocity feedback. The knowledge of the position of the end effector 2 acquired using the measuring construction 3 is used for the position feedback. Considering the fact that the measuring construction 3 is not loaded by the forces of the drives, it is not deformed by these forces then, it provides more accurate data on a position of the end effector 2 and using it for the control enables more accurate positioning of the end effector 2 with the tool 20.

In Fig. 2 there is a depiction of another basic embodiment of the device for measuring a position of the end effector 2 of the manipulator in order to control the manipulator. It concerns a planar projection of a spatial manipulator with a serial kinematic structure with 6 degrees of freedom and 6 drives. The end effector 2 with the tool 20 is carried by the driving construction 1 positioned between the frame 4 and the end effector 2 and created by five arms 5 connected using six rotational joints 6 to the drives. Collateral to the driving construction 1, between the frame 4 and the end effector 2 there is the measuring construction 3 positioned, separated from the driving construction 1. The individual measuring construction 3 has a parallel kinematic structure created by two strings of arms 8 positioned between the frame 4 and the end effector 2 representing, in this case, the platform of a parallel kinematic structure of the measuring construction 3. Each of the strings of the individual measuring construction 3 is created by five arms 8 connected using six rotational joints 9 equipped with rotational movement sensors. The individual measuring construction 3 contains no drives inside to drive the end effector 2 and contains only the relative movement sensors in the rotational joints 9.

The number of the movement sensors in the rotational joints 9 is twelve and this is higher than the number of degrees of freedom of the spatial manipulator, which is six.

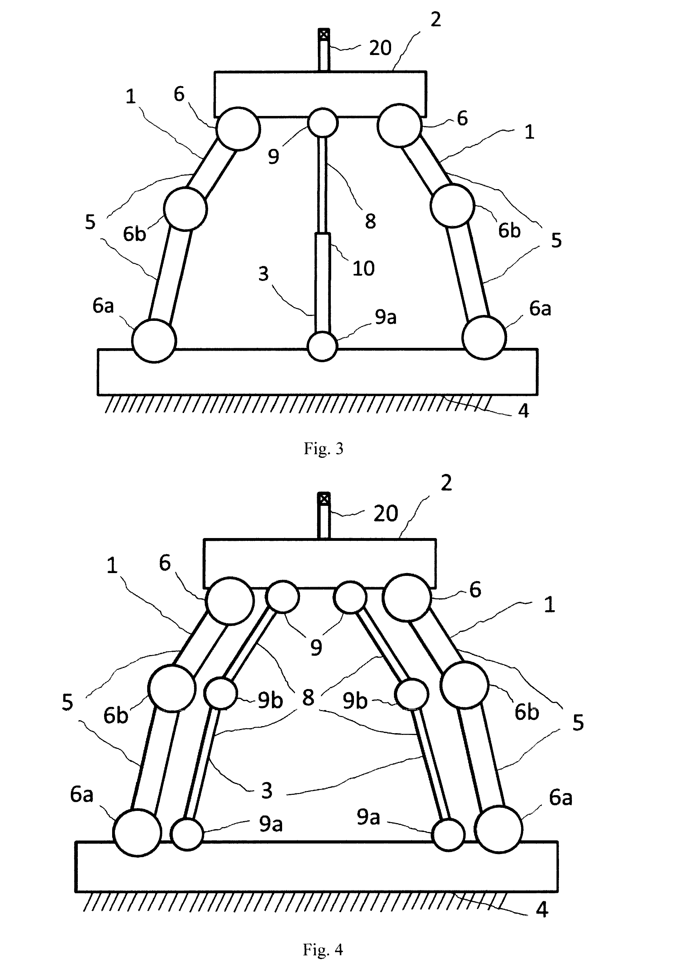

In Fig. 3 there is a depiction of another embodiment of the device for measuring a position of the end effector of the manipulator in order to control the manipulator. It concerns either a planar manipulator with a parallel kinematic structure with 3 degrees of freedom and 4 drives or a projection of a spatial manipulator with a parallel kinematic structure with 6 degrees of freedom and at least 6 drives. The end effector 2 with a tool 20 is carried by the parallel driving construction 1 positioned between the frame 4 and the end effector 2 representing the platform of the parallel kinematic structure.
In the case of a planar manipulator the parallel kinematic structure is created by two strings, with four parallel arms 5 in total connected using the rotational joints 6b to each other, using the rotational joints 6a to the frame 4 and using the rotational joints 6 to the end effector 2. The drives are positioned in the four rotational joints 6a and 6b. Collateral to the driving construction 1, between the frame 4 and end effector 2 there is the measuring construction 3 positioned, separated from the driving construction 1. The individual measuring construction 3 has a serial kinematic structure created by the arm 8 positioned between the frame 4 and the end effector 2. The arm 8 contains a sliding guide 10 and is connected to the frame 4 using the rotational joint 9a and to the end effector 2 using the rotational joint 9. In both the rotational joints 9 and 9a there are the relative movement sensors and the sliding guide 10 is equipped with the relative movement sensor. The individual measuring construction 3 contains no drives inside to drive the end effector 2 and contains only the relative movement sensors in the joints between the arm 8 and the frame 4 and the end effector 2 and between the movable parts of the arm 8. The number of the movement sensors on the measuring construction 3 is three and this is equal to the number of degrees of freedom of the planar manipulator, which is three.
In the case of the spatial manipulator the parallel driving construction 1 is created by at least six strings, whereas each of the strings is created by two arms 5 connected to each other using rotational (spherical) joints 6b and connected to the frame 4 using the rotational joint 6a (with one degree of freedom) and to the end effector 2 using the rotational (spherical) joint 6. The drives are positioned in the rotational joints 6a between the frame 4 and the first arm 5 in the string. The measuring construction 3 is created by the arm 8 containing the sliding guide 10 and connected to the frame 4 using the rotational (spherical) joint 9a and to the end effector 2 using the rotational (spherical) joint 9. The rotational (spherical) joint 9a has only two degrees of freedom and is realized e.g. as a Cardan joint. Both the rotational (spherical) joints 9 and 9a are equipped with the relative rotational movement sensors in the joints and the sliding guide 10 contains a sensor of a relative movement of parts of the arm 8 in this guide. The number of the movement sensors on the measuring construction 3 is six and this is equal to the number of degrees of freedom of the spatial manipulator, which is six.

In Fig. 4 there is a depiction of another embodiment of the device for measuring a position of the end effector 2 of the manipulator in order to control the manipulator. It concerns either a planar manipulator with a parallel kinematic structure with 3 degrees of freedom and 4 drives or a projection of a spatial manipulator with a parallel kinematic structure with 6 degrees of freedom and at least 6 drives, similar to Fig. 3. The driving construction 1 of the manipulator is similar to the construction in Fig. 3. The measuring construction 3 is different. Collateral to the driving construction 1, between the frame 4 and end effector 2 there is the measuring construction 3 positioned, separated from the driving construction 1.

In the case of the planar manipulator the individual measuring construction 3 has a parallel kinematic structure created by two strings of arms 8 positioned between the frame 4 and the end effector 2 representing the platform of a parallel kinematic structure of the measuring construction 3. Each of the strings of the individual measuring construction 3 is created by two arms 8 connected to each other using the rotational joint 9b and attached using the rotational joint 9a to the frame 4 and using the rotational joint 9 to the end effector 2 and equipped with rotational sensors of the relative movement. The individual measuring construction 3 contains no drives inside to drive the end effector 2 and contains only sensors of the relative rotational movement in the rotational joints 9, 9a, 9b. The number of the movement sensors in the rotational joints 9, 9a, 9b is six and this is larger than the number of degrees of freedom of the planar manipulator, which is three.
In the case of a spatial manipulator the individual measuring construction 3 has a parallel kinematic structure created by at least two strings of arms 8 positioned between the frame 4 and the end effector 2 representing the platform of the parallel kinematic structure of the measuring construction 3. Each of the strings of the individual measuring construction 3 is created by two arms 8 connected to each other using the rotational (spherical with two degrees of freedom - Hook) joint 9b and attached using the rotational joint 9a (with one degree of freedom) to the frame 4 and using the rotational (spherical with three degrees of freedom) joint 9 to the end effector 2 and equipped with rotational sensors of the relative movement according to the number of degrees of freedom of the joints 9, 9a, 9b. The individual measuring construction 3 contains no drives inside to drive the end effector 2 and contains only sensors of the relative rotational movement in the joints 9, 9a, 9b. The number of movement sensors in the rotational joints 9a and the rotational (Hook and spherical) joints 9b and 9 is six for each of the strings of the arms 8*,* therefore at least twelve for two of the strings of the arms 8 and this is more than number of degrees of freedom of a spatial manipulator, which is six.

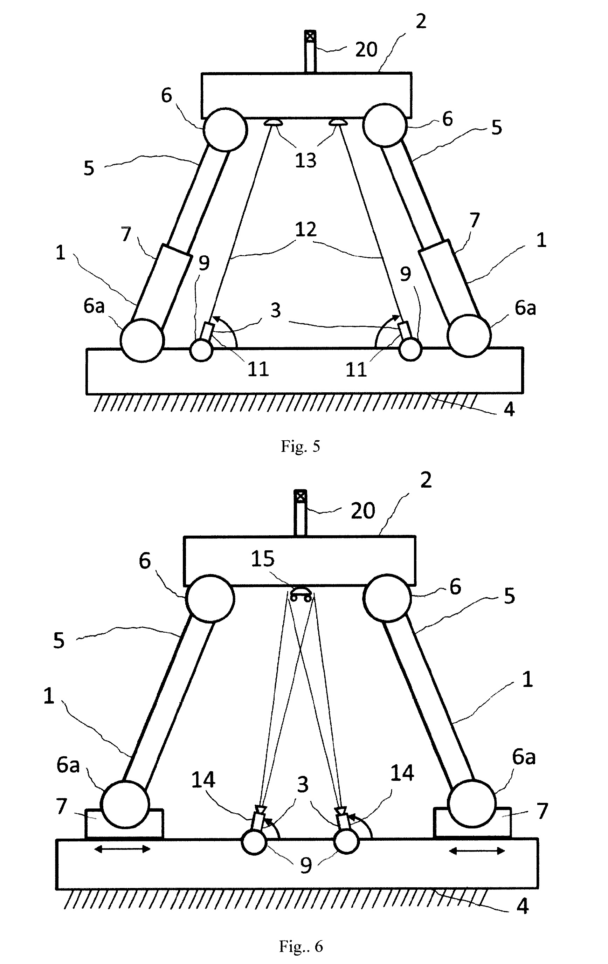

In Fig. 5 there is a depiction of another embodiment of the device for measuring a position of the end effector of the manipulator in order to control the manipulator. It concerns either a planar manipulator with a parallel kinematic structure with 3 degrees of freedom and 4 drives or a projection of a spatial manipulator with a parallel kinematic structure with 6 degrees of freedom and at least 6 drives. The end effector 2 with the tool 20 is carried by the driving construction 1 positioned between the frame 4 and the end effector 2 and is created, in the case of a planar manipulator, with two parallel arms 5 containing the sliding guides 7 and connected using the rotational joints 6a to the frame 4 on one side and using the rotational joints 6 to the end effector 2 on the other side.
The spatial manipulator has 6 degrees of freedom and is created by six parallel arms 5 containing the sliding guides 7 and connected using the rotational (spherical) joints 6a to the frame 4 on one side and using the rotational (spherical) joints 6 to the end effector 2 on the other side. The drives are positioned in the sliding guides 7*.* There can even be more parallel arms 5, e.g. 8.
Collateral to the driving construction 1, between the frame 4 and end effector 2 there is the measuring construction 3 positioned, separated from the driving construction 1. The individual measuring construction 3 is created by two optical sensors 11 and relevant reflectors 13. Each of the optical sensors 11 positioned on the frame 4 emits the laser beam 12, which is reflected from the reflector 13 of the laser beam 12 positioned on the end effector 2 and impacts back to the optical sensor 11, where it is processed by a laser interferometer and the known, but sophisticated, feedback control for the movement of the optical sensor 11 in the rotational joint 9 in the case of the planar manipulator and in the spherical joint 9 in the case of the spatial manipulator. In this case the rotational (spherical) joint 9 is equipped with a drive for the movement of the optical sensor 11, but the laser beam 12, representing an equivalent to the arm of the measuring construction 3 here, is not stressed or deformed by the drive. The relative position of the end effector 2 and the frame 4 determined from the relative position of the optical sensors 11 and the reflectors 13 of the laser beam 12 is given by their distance that is determined by the laser interferometer and by rotation in the rotational (spherical) joints 9 of the optical sensors 11. The individual measuring construction 3 contains no drives inside to drive the end effector 2, it contains only drives for the movement of the optical sensor 11 in the rotational joints 9 and sensors of the relative rotational movement in the rotational joints 9 and a sensor of a distance of the sensors 11 from the reflectors 13 determined by the laser interferometer in the optical sensor 11. The number of the movement sensors (rotation in the rotational joints 9 and length of the laser beams 12) is two for each of the optical sensors 11 in a plane, thus four in Fig. 5 for the planar manipulator, and larger than the number of degrees of freedom of the planar manipulator.
For the spatial manipulator the number of the movement sensors (rotation in the rotational spherical joints 9 and length of the laser beam 12) is three for each of the optical sensors 11 in a space, thus six in Fig. 5 for the spatial manipulator at minimum.
The optical sensor 11 and the reflector of the laser beam 13 can be positioned conversely, the optical sensor on the end effector 2 and the reflector of the laser beam 13 on the frame 4.

In Fig. 6 there is a depiction of another embodiment of the device for measuring a position of the end effector of the manipulator in order to control the manipulator. It concerns either a planar manipulator with a parallel kinematic structure with 3 degrees of freedom and 4 drives or a projection of a spatial manipulator with a parallel kinematic structure with 6 degrees of freedom and at least 6 drives. The end effector 2 with the tool 20 is carried by the driving construction 1 positioned between the frame 4 and the end effector 2 and created, in the case of the planar manipulator, by two parallel arms 5 of a constant length connected through the rotational joints 6a and the sliding guides 7 to the frame 4 on one side and through the rotational joints 6 to the end effector 2 on the other side. The drives are in the sliding guides 7 and in the rotational joints 6a.
The spatial manipulator has 6 degrees of freedom and is created by six parallel arms 5 of a constant length connected through the rotational (spherical) joints 6a and the sliding guides 7 to the frame 4 on one side and through the rotational (spherical) joints 6 to the end effector 2 on the other side. The drives are positioned in the sliding guides 7. There can even be more parallel arms 5 than 6, e.g. 8.
Collateral to the driving construction 1, between the frame 4 and the end effector 2 there is the measuring construction 3 positioned, separated from the driving construction 1. The individual measuring construction 3 consists of two optical cameras 14 with a reference element 15. Each of the cameras 14 scans an image of the reference element 15 and a relative position of the reference element 15 and the optical cameras 14 is determined using the images by photogrammetry methods and thus a relative position of the end effector 2 and the frame 4 is determined. At the same time, the relative position of the end effector 2 and the frame 4 is used for the feedback control of the movement of the optical cameras 14 in the rotational joints 9 in the case of the planar manipulator and in the spherical joints 9 in the case of the spatial manipulator so that the optical cameras 14 can still scan the reference element 15. In this case the rotational (spherical) joints 9 are equipped with a drive for the movement of the optical sensors 14, but the optical beam from the reference element 15, representing an equivalent to the arm of the measuring construction 3 here, is not stressed or deformed by the drive. The individual measuring construction 3 contains no drives inside to drive the end effector 2, it contains only drives for the movement of the optical cameras 14 and the relative movement sensors in the rotational joints 9. The number of the movement sensors (rotation in the rotational joints 9 and a relative position of the optical cameras 14 and the reference element 15) is two for each of the optical cameras 14 and thus four for the planar manipulator and is larger than the number of three degrees of freedom of the planar manipulator.
For the spatial manipulator the number of the movement sensors (rotation in the rotational joints 9 and a relative position of the optical cameras 14 and the reference element 15) is three for each of the optical cameras 14 and thus minimally six for the spatial manipulator which has six degrees of freedom.

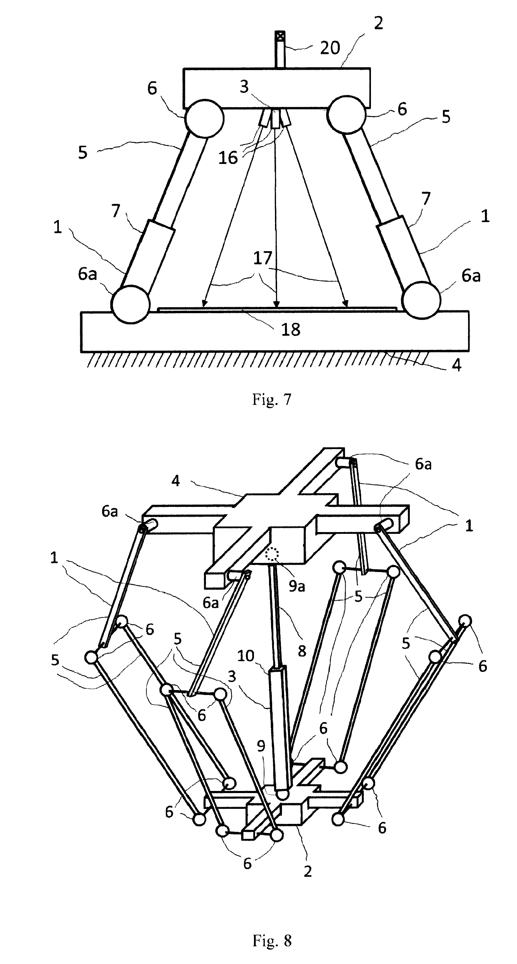

In Fig. 7 there is a depiction of another embodiment of the device for measuring a position of the end effector 2 of the manipulator in order to control the manipulator, alternatively to Fig. 5. The driving construction 1 of the manipulator is the same as the construction in Fig. 5. The measuring construction 3 is different. It is created by three and more sources 16 of the laser beam 17. The sources 16 of the laser beam 17 are attached to the end effector 2. The laser beams 17 impinge on the photosensitive element 18 attached to the frame 4. The photosensitive element 18 determines the coordinates of the impingement of the laser beam 17 on the frame 4. From the coordinates of the impingement of the laser beam 17 the relative position of the end effector 2 and the frame 4 is determined. The number of the sources 16 of the laser beam 17 is three, but can be four and more. The number of the movement sensors is given by the number of the measured coordinates of the impinging laser beams 17 on the photosensitive element 18. For the planar manipulator in Fig. 7 it is three (three times one coordinate) and for the spatial manipulator it is six (three times two coordinates). Their number is equal to the number of degrees of freedom of the manipulator.
The sources 16 of the laser beam 17 and the photosensitive element 18 can be positioned conversely, the sources 16 of the laser beam 17 on the frame 4 and the photosensitive element 18 on the end effector 2. More photosensitive elements 18 can be positioned on the frame 4 or on the end effector 2.

In Fig. 8 there is a depiction of another embodiment of the device for measuring a position of the end effector 2 of the manipulator in order to control the manipulator. It concerns a spatial manipulator with a parallel kinematic structure with 3 degrees of freedom and 4 rotational drives in the rotational joints 6a. In this case it concerns a redundantly driven parallel Delta manipulator. The parallel driving construction 1 is created by four strings, whereas each of the strings is created by three arms 5 connected to each other and to the end effector 2 using the rotational (spherical) joints 6 and connected to the frame 4 using the rotational joint 6a. The drives are positioned in the rotational joints 6a between the frame 4 and the first arm 5 in the string. The following two arms 5 are positioned parallel and create a parallelogram.
The measuring construction 3 is created by the arm 8 containing the sliding guide 10 and connected to the frame 2 using the rotational (spherical) joint 9 and to the end effector 4 using the rotational (spherical) joint 9a. The rotational (spherical) joint 9, 9a has only two degrees of freedom and can be realized e.g. as a Cardan joint. Both the rotational (spherical) joints 9 and 9a and the sliding guide 10 are equipped with the relative movement sensors in the joints and in the sliding guide. The individual measuring construction 3 contains no drives inside to drive the end effector 2 and contains only sensors of the relative rotational movement in the joints 9, 9a, and a sensor of the relative linear movement in the sliding guide 10. The number of the movement sensors on the measuring construction 3 is six and this is equal to the number of degrees of freedom of the spatial manipulator, which is six.

The measuring construction 3 can be, for the Delta manipulator, created also similarly to the measuring construction shown in Figs. 4-7. For the solution of the measuring construction 3 similar to the solution in Fig. 4 it would be possible to use, for this embodiment according to Fig. 8, the parallel arms 8 similar to the parallel arms 5 of the driving construction 1.
All the above mentioned embodiments of the device for measuring a position of the end effector 2 of the manipulator in order to control the manipulator can be used not only for manipulators and industrial robots but also for machining tools and measuring devices. It is especially advantageous if, on the machining tool, the measuring construction 3 is positioned in the covered part where the lighter measuring construction is not exposed to negative influences from machining.

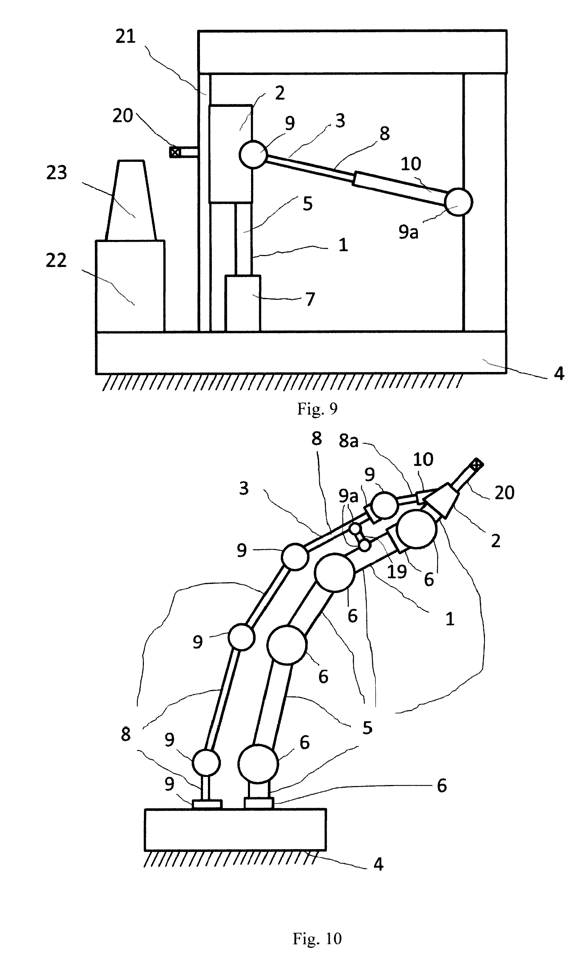

In Fig. 9 there is a depiction of an embodiment of the device for measuring a position of the end effector 2 of the machining tool in order to control the manipulator. It concerns a schematic planar projection of a horizontal machining machine. The end effector 2 with the tool 20 is carried by the driving construction 1 positioned between the frame 4 and the end effector 2 and is created by the arms 5 connected to the frame 4 and containing the sliding guides 7 equipped with the drives. The tool 20 machines the work piece 23 positioned on the work table 22 and this machining process is separated from the remaining part of the machine using a covering 21. The covering 21 is carried by the end effector 2. The number of the drives and degrees of freedom of the machining tool can be different. For a horizontal machining machine the end effector 2 usually has 2 degrees of freedom (in Fig. 9 there is only one arm 5 with a drive depicted in a projection) and the remaining degrees of freedom up to the number of 5 are in the work table 22 with the work piece 23. It is possible that the end effector 2 has all the 5 drives and degrees of freedom.
The measuring construction 3 is, advantageously, positioned between the end effector 2 and the frame 4 in the covered area separated from the machining process using the covering 21. The measuring construction 3 is created by the arm 8 containing the sliding guide 10 and connected to the frame 4 using the rotational (spherical) joint 9a and to the end effector 2 using the rotational (spherical) joint 9. The rotational (spherical) joint 9, 9a has only two degrees of freedom realized as a Cardan joint. Both the rotational (spherical) joints 9 and 9a are equipped with the relative rotational movement sensors and the sliding guide 10 contains the linear movement sensor in the sliding guide. The individual measuring construction 3 contains no drives inside to drive the end effector 2 and contains only the relative rotational movement sensors in the joints 9, 9a, and the relative linear movement sensor in the sliding guide 10. The number of the movement sensors on the measuring construction 3 is six and is larger than the number of degrees of freedom of the machining tool, which is usually not more than five.

The measuring construction 3 is, advantageously, connected to the driving construction 1 next to the end effector 2 with at least another one connecting element 19.
An example of such a solution is in Fig. 10. This, above all, decreases the danger of collisions between the driving construction 1 and the measuring construction 3. Further, this solution advantageously decreases the work area needed for the measuring construction 3. Using the connecting element 19 a fixed attachment or an attachment using the rotational joint 9a can be equipped with the sensors of the relative rotational movement and/or equipped with the sliding guide 10 containing the sensor of the linear movement.
In Fig. 10 there are the driving construction 1 and the measuring construction 3 basically similar to the driving and measuring construction according to Fig. 1. This device in Fig. 10 differs by connecting the connecting element 19 to the driving construction 1 using the rotational (spherical) joints 9a equipped with the relative rotational movement sensors and by adding the sliding guide 10 equipped with the relative movement sensor to the arm 8a.

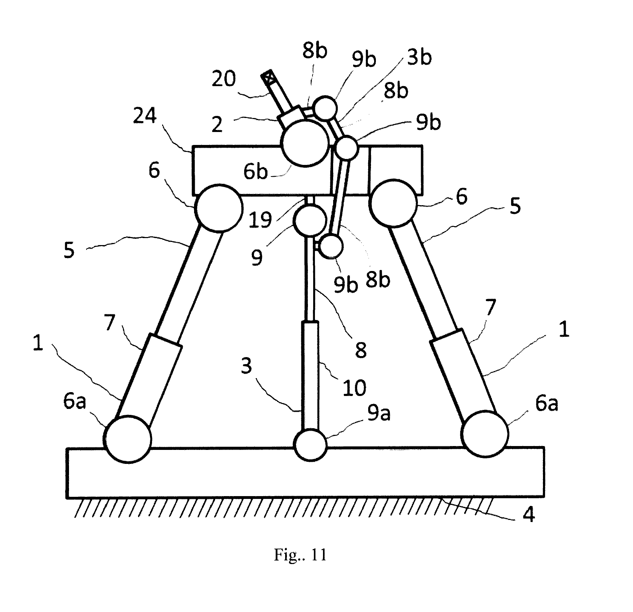

In Fig. 11 there is a depiction of an alternative embodiment of the device for measuring a position of the end effector 2 of the manipulator in order to control the manipulator, alternatively to Figs. 5 and 3. The driving construction 1 is the same as the driving construction in Fig. 5. The driving construction 1 in Fig. 11 ensures the movement of the platform 24 of the manipulator with a parallel kinematic structure.
The driving construction 1 further ensures the movement of the end effector 2 with the tool 20 in further degrees of freedom in addition to the movability of the end effector 2 given by the number of degrees of freedom of the end effector 2 for the embodiment in Fig. 5.
The end effector 2 is connected to the platform using the rotational (spherical) joint 6b, which contains drives in the number of degrees of freedom of the rotational (spherical) joint 6b. Therefore the end effector 2 with the tool 20 can change the orientation towards the position of the platform 24.

The measuring construction 3 is the same as the measuring construction 3 in Fig. 3. The measuring construction 3 ensures the measurement of the position of the platform 24. To this part of the measuring construction 3 an additional measuring construction 3b is connected which ensures the measurement of the orientation of the end effector 2 with the tool 20 towards the platform 24 and therefore ensures determination of the position of the end effector 2 with the tool 20 towards the frame 4.

The measuring construction 3 is connected using the connecting element 19 to the platform 24 of the driving construction 1 using the rotational (spherical) joint 9 equipped with the relative rotational movement sensors. The measuring construction 3b consists of the arms 8b connected using the rotational (spherical) joints 9b and it is connected to the arm 8 using the rotational (spherical) joint 9b and fixed to the end effector 2. The rotational (spherical) joints 9b contain the relative rotational movement sensors in a number equal to the number of degrees of freedom of these joints.
The device depicted in Fig. 11 can represent a planar as well as a spatial manipulator. The planar manipulator has three degrees of freedom of the platform 24 and one degree of orientation of the end effector 2 towards the platform 24. The number of drives is five (in the rotational joints 6a, 6b and in the sliding guides 7). The number of sensors of the measuring construction 3, 3b is six (in the rotational joints 9, 9a, 9b and in the sliding guide 10).
The spatial manipulator has six degrees of freedom of the platform 24 and two degrees of orientation of the end effector 2 towards the platform 24. The number of drives is at least eight (in six sliding guides 7 and in the rotational (spherical - Hook joint with two degrees of freedom) joint 6b). The number of sensors of the measuring construction 3, 3b is twelve (in the rotational joints 9, 9a, 9b and in the sliding guide 10).

Within the invention there are various combinations of embodiments of the device for measuring a position of the end effector possible with various numbers of drives and sensors and with various combinations of solutions of the driving construction and the measuring construction and their connection.

The described embodiments of the measurements of the position of the end effector often use a redundant number of sensors, therefore more sensors than degrees of freedom. The use of a redundant number of the sensors, so a larger number of the sensors than the number of degrees of freedom of the end effector of the manipulator, is advantageous for improving measurement accuracy, for the calibration of the manipulator, for auto-calibration of the collateral construction with the sensors or for on-line measurement and the compensation of temperature deformations. It is especially advantageous, when the number of the sensors is higher at least by two than the number of degrees of freedom.

Also the described embodiments of the manipulators often use a redundant number of the drives, thus more drives than degrees of freedom of the manipulator. This enables increasing and equalizing the action of forces of the drives on the end effector 2 in the entire working area and/or enables the use of other advanced solutions of control with the help of redundant drives, e.g. an antibacklash control.

Control of the movement of the manipulators, industrial robots, machining tools and/or measuring devices is processed by a computer.

## Claims

1. The device for measuring a position of the end effector (2), especially of the manipulator or the machining tool, driven by the driving construction (1) with the drives positioned between the frame (4) and the end effector (2) of the manipulator in order to control the manipulator featured by the fact that, parallel to the driving construction (1) with the drives of the manipulator there is the individual measuring construction (3) positioned between the frame (4) and the end effector (2), with no drives, equipped with the movement sensors in a number equal or larger than the number of degrees of freedom of the end effector (2) of the manipulator.

2. The device for measuring a position of the end effector according to Claim 1, featured by the fact that the measuring construction (3) is created by one string with serial positioned arms (5).

3. The device for measuring a position of the end effector according to Claim 1, featured by the fact that the measuring construction (3) is created by at least two strings with the arms (5) positioned in parallel.

4. The device for measuring a position of the end effector according to Claim 1, featured by the fact that the measuring construction (3) consists of at least two optical sensors (11) positioned on the frame (4) or on the end effector (2) and at least two reflectors (13) of the laser beam positioned on the end effector (2) or on the frame (4).

5. The device for measuring a position of the end effector according to Claim 1, featured by the fact that the measuring construction (3) consists of at least two cameras (14) positioned on the frame (4) or on the end effector (2) and a reflector (13) of laser beams positioned on the end effector (2) or on the frame (4).

6. The device for measuring a position of the end effector according to Claim 1, featured by the fact that the measuring construction (3) consists of the source (16) of the laser beam (17) positioned on the end effector (2) or on the frame (4) and a photosensitive element (18) positioned on the frame (4) on the end effector (2).

7. The device for measuring a position of the end effector according to one of the abovementioned Claims, featured by the fact that the measuring construction (3) is connected to the driving construction (1) next to the end effector (2) with at least another one connecting element (19).

8. The device for measuring a position of the end effector according to one of the abovementioned Claims, featured by the fact that between the driving construction (1) and the end effector (2) there is the platform (24) positioned, to which the measuring construction (3) is connected, which is connected to the end effector (2) using the additional measuring construction (3).

9. The device for measuring a position of the end effector according to one of the abovementioned Claims, featured by the fact that the measuring construction (3) is equipped with the movement sensors in number higher at least by two than the number of degrees of freedom of the end effector (2) of the manipulator.

10. The device for measuring a position of the end effector according to one of the abovementioned Claims, featured by the fact that the measuring construction (3) is positioned under the covering (21) which is carried by the end effector (2).
